Europäisches Patentamt

European Patent Office

Office européen des brevets

(19)

(11) Veröffentlichungsnummer: **0 249 799 B1**

## (12) EUROPÄISCHE PATENTSCHRIFT

(45) Veröffentlichungstag der Patentschrift: **22.01.92**

(51) Int. Cl.5: **G01N 21/88**, G01M 11/02

(21) Anmeldenummer: **87107992.7**

(22) Anmeldetag: **03.06.87**

(54) **Vorrichtung zum Prüfen von Bauteilen aud transparentem Material auf Oberflächenfehler und Einschlüsse.**

(30) Priorität: **14.06.86 DE 3620129**

(43) Veröffentlichungstag der Anmeldung:
**23.12.87 Patentblatt 87/52**

(45) Bekanntmachung des Hinweises auf die
Patenterteilung:
**22.01.92 Patentblatt 92/04**

(84) Benannte Vertragsstaaten:
**AT BE CH DE ES FR GB GR IT LI LU NL SE**

(56) Entgegenhaltungen:
DE-A- 2 337 597
GB-A- 2 085 579
JP-A- 6 129 744

PATENT ABSTRACTS OF JAPAN, Band 3, Nr. 9, 26. Januar 1979, Seite 102 E 86 & JP-A-53 136 881

(73) Patentinhaber: **Battelle-Institut e.V.
Am Römerhof 35 Postfach 900 160
W-6000 Frankfurt/Main 90(DE)**

(72) Erfinder: **Schmalfuss, Harald, Dr.
Rosenring 11a
W-6054 Rodgau 3(DE)**
Erfinder: **Sinsel, Friedel
Severusstrasse 49
W-6000 Frankfurt am Main(DE)**
Erfinder: **Bolz, Reinhold
Weingartenstrasse 6
W-6093 Flörsheim(DE)**

**Beschreibung**

Die vorliegende Erfindung betrifft eine Vorrichtung nach dem Oberbegriff des Anspruchs 1.

Bauteile aus transparentem Material, beispielsweise optische oder ophthalmische Linsen müssen vor ihrer Verwendung auf Fehler, insbesondere Oberflächenfehler wie Kratzer, Wischer, Risse, Aussprünge, Flecken und auf Einschlüsse wie Blasen oder Schlieren geprüft werden. Solche Fehler würden die Verwendbarkeit einer Linse einschränken, wenn sie die in DIN 3140 angeführten Grenzwerte übersteigen.

Üblicherweise erfolgt die Prüfung optischer Bauteile als Sichtprüfung durch den Menschen. Eine solche Prüfung muß in einem weitgehend abgedunkelten Raum durchgeführt werden. Sie ist teuer, nicht genügend objektiv und wegen der hohen Monotomie der Prüfvorgänge nicht genügend zuverlässig.

Man hat sich deshalb bemüht Verfahren und Vorrichtungen zur automatischen, objektiven Prüfung optischer Bauteile zu entwickeln.

Aus der DE-OS 32 37 511 ist es bekannt, zu prüfende optische Bauteile in den optischen Strahlengang einer Fernsehkamera zu bringen und durch das Bauteil hindurch ein Testmuster auf die Kamera abzubilden. Die durch Fehler im Bauteil hervorgerufenen Störungen führen zu einem Videosignal, das von dem durch das Bauteil nicht beeinflußten Soll-Signal abweicht. Aus der Abweichung von Soll- und Ist-Signal wird auf die Fehler geschlossen. Eine nach diesem Verfahren arbeitende Vorrichtung ist recht aufwendig und vermag kleinere Störungen, beispielsweise durch Kratzer, Wischer oder Haarrisse nicht zu erkennen.

Um die Empfindlichkeit des Prüfvorganges zu steigern, wird in der DE-OS 30 11 014 vorgeschlagen das zu prüfende Bauteil als Ganzes zu beleuchten, ein Fernsehbild zu erzeugen und das Videosignal Zeile für Zeile zu analysieren. Auch dieses Verfahren ist nicht hinreichend genau.

Ein noch älterer Vorschlag für ein Prüfverfahren findet sich in der DE-OS 23 37 597. Dort wird ein Lichtstrahl auf die Oberfläche des zu prüfenden Bauteils fokussiert und wird punktförmig unter Erhaltung seines Fokussierungszustandes über die Oberfläche bewegt. Das durch das Bauteil tretende Licht wird zurückreflektiert, tritt nochmals durch das Bauteil und fällt dann auf einen Detektor. Abweichungen in der Intensität, des Empfängersignales erlauben es, auf einen Fehler zu schließen und diesen auch zu lokalisieren.

Eine nach diesem Verfahren arbeitende Vorrichtung ist sehr aufwendig. Sie erlaubt nur die Prüfung der Fläche des Werkstückes, auf die der Abtaststrahl fokussiert ist.

Die GB-A-2085579, von der im Oberbegriff des Patentanspruchs 1 ausgegangen wird, gestattet die Erfassung von Fehlern in der Ober- und Unterseite von transparenten Platten. In einer dort beschriebenen Vorrichtung wird ein Laserstrahl auf eine der Oberflächen der Platten fokussiert und das infolge von Fehlern gestreute Licht wird mittels einer geneigt zur Laserstrahlrichtung angeordneten optischen Abbildungseinrichtung erfaßt. Diese enthält eine Lochblende, die entweder als Maske zur Erfassung des Streulichts von Fehlern in der Plattenober- oder Plattenunterseite ausgebildet ist. So ist es bei ausreichend dicken Platten möglich, entweder Fehler der Ober- oder Unterseite zu erfassen, da das Streulicht von Fehlern der jeweils anderen Seite der Platte durch die Lochblende ausgeblendet wird. Bei sehr dünnen Platten funktioniert diese Isolation jedoch nicht mehr. Um diesen Mangel zu beheben und um gleichzeitig beide Plattenoberseiten untersuchen zu können, wird in dieser Schrift die Verwendung zweier Laserstrahlen vorgeschlagen, von denen jeweils einer auf eine Plattenoberfläche fokussiert wird, die mit dem Strahl abgetastet wird. Die hierfür beschriebene Anordnung ist jedoch recht aufwendig und gestattet auch nicht die Erfassung von Fehlern in anderen Ebenen der Platte. Auch ist die Vorrichtung speziell auf plattenartige transparente Gegenstände ausgerichtet.

Es ist die Aufgabe der vorliegenden Erfindung eine Vorrichtung zum Prüfen von Bauteilen aus transparentem Material auf Oberflächenfehler und Einschlüsse zu schaffen, die eine sichere Erkennung solcher Fehler in einer oder mehreren vorwählbaren Ebenen oder Flächen des Bauteils ermöglicht.

Diese Aufgabe wird durch eine Vorrichtung gelöst, deren Aufbau im kennzeichnenden Teil des Anspruchs 1 angegeben ist.

Die erfindungsgemäße Vorrichtung zeichnet sich dadurch aus, daß das zu prüfende Bauteil drehbar angeordnet ist und um seine Achse rotierend in Durchmesserrichtung von einem linear bewegten Lichtstrahl abgetastet wird. Ferner ist die Neigung einer Abbildungseinrichtung gegenüber der Auftreffrichtung des Beleuchtungsstrahls vorwählbar und die Maske zur Aussonderung des Bildes einer Ebene des Prüflings ist austauschbar.

Bei der Vorrichtung nach der Erfindung wird durch das abtastende Lichtbündel ein Lichtschnitt durch das zu prüfende Bauteil erzeugt. Dieser Lichtschnitt wird durch die zur Signalgewinnung dienende Einrichtung abgebildet, wobei zur Abbildung nur das Licht herangezogen wird, das durch Fehler im Bauteil abgelenkt ist. Der Winkel, den die optische Achse dieser Einrichtung mit der Drehachse des Bauteils bildet, ist vorteilhaft einstellbar. Er kann, je nach dem Ablenkverhalten des festzustellenden Fehlers zwischen 10 und 60° liegen, wobei sich ein Winkel von 40° als zweckmäßig erwiesen hat. Damit lassen sich Kratzer, Haarrisse und andere, relativ scharfkantig begrenzte Fehler in der Oberfläche des Bauteils nachweisen.

Bei der Vorrichtung nach der Erfindung dient die in der Bildebene der Einrichtung zur Signalgewinnung vorgesehene Maske dazu, die Bilder von Rück- und Vorderseite des zu prüfenden Bauteils zu trennen. Bei entsprechender Ausbildung der Masken kann auch eine im Inneren des Bauteils gelegene Ebene zur Fehlererkennung herangezogen werden.

Die Anordnung zur Auswertung der erzeugten Bildsignale kann beispielsweise als Monitor ausgebildet sein, auf dem praktisch ein Dunkelfeldbild der zu beobachtenden Linsenfläche erscheint, in welchem die Fehler hell dargestellt sind.

Es kann auch eine automatisch arbeitende Anordnung vorgesehen sein, die Fehler nach bestimmten Kriterien erfaßt und diese nach Größe, Häufung und Ort gemäß DIN 3140, Teil 2 und 7 klassifiziert. Eine solche Anordnung ist beispielsweise Gegenstand der Patentanmeldung EP-A-0249798 mit dem Titel "Verfahren zum Prüfen von Bauteilen aus transparentem Material auf Oberflächenfehler und Einschlüsse", die von der Anmelderin am selben Tag wie die vorliegende Anmeldung eingereicht wurde. Eine solche automatisch arbeitende Einrichtung erlaubt die Serienprüfung von optischen Bauteilen.

Die Ansprüche 2 und 3 geben eine zweckmäßige Ausbildung der Vorrichtung nach der Erfindung an, die es ermöglicht, die Vorder- und Rückseite des Bauteils getrennt oder gleichzeitig zu prüfen.

Es hat sich als vorteilhaft erwiesen die Vorrichtung entsprechend Anspruch 4 auszubilden.

Fehler des Bauteils, die nicht scharfkantig begrenzt sind, streuen das auftreffende Licht nicht isotrop sondern stark anisotrop in einen engbegrenzten Raumwinkel, der sehr große Werte annehmen kann. Solche, nicht scharfkantig begrenzten Oberflächenfehler sind beispielsweise Wischer. Diese Fehler lassen sich mit der Vorrichtung, wie sie bisher beschrieben ist, im allgemeinen nicht nachweisen. Es ist deshalb besonders vorteilhaft, die Vorrichtung gemäß den Ansprüchen 5 bis 7 auszubilden, d.h. ein zusätzliches System zur Signalerzeugung vorzusehen.

Die Erfindung wird im folgenden anhand der Figuren 1 bis 5 der beigefügten Zeichnungen näher erläutert. Im einzelnen zeigen:

Fig. 1    ein Ausführungsbeispiel einer Vorrichtung nach der Erfindung in Prinzipdarstellung;

Fig. 2    das Ausführungsbeispiel der Fig. 1 in einer um 90° gedrehten Ansicht;

Fig. 3    ein Ausführungsbeispiel einer Einrichtung zur Signalgewinnung;

Fig. 4    ein anderes Ausführungsbeispiel der erfindungsgemäßen Vorrichtung in Prinzipdarstellung;

Fig. 5    eine beispielsweise Anordnung zur Erzeugung von Auswertesignalen.

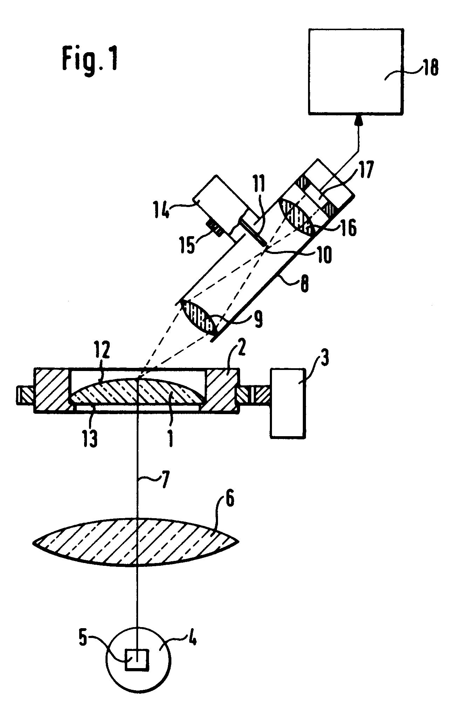

In Fig. 1 ist mit (1) eine Linse aus transparentem Material bezeichnet, die auf Oberflächenfehler untersucht werden soll. Diese Linse ist in einem Drehteller (2) angeordnet, welcher mittels des Schrittmotors (3) gedreht wird.

Zur Beleuchtung der Linse (1) dient ein Laser (4), dessen Parallel-Lichtbündel (7) durch einen Spiegelscanner (5) innerhalb eines vorgegebenen Raumwinkels linear abgelenkt wird. Eine Sammellinse (6) ist so angeordnet, daß ihr einer Brennpunkt mit dem Drehpunkt des Spiegelscanners (5) zusammenfällt. Demzufolge werden die abgelenkten Lichtbündel hinter der Linse (6) parallel zueinander bewegt und zwar entlang eines Durchmessers der Linse (1) zwischen den Extrempositionen (7a) und (7b). Eine solche Beleuchtungseinrichtung ist Gegenstand der Patentanmeldung EP-A-0249800 mit dem Titel "Vorrichtung zum Beleuchten von Bauteilen aus transparentem Material bei der Fehlerprüfung", welche am selben Tag wie die vorliegende Anmeldung von der Anmelderin eingereicht wurde.

Der entstehende Lichtschnitt des Laserstrahles (7) mit der Linse (1) wird mittels einer Einrichtung (8) beobachtet, welche geneigt zur Drehachse der Linse (1) angeordnet ist. Der Neigungswinkel der Einrichtung (8) ist so gewählt, daß sie das von Oberflächenfehlern der Linse (1) isotrop gestreute Licht erfaßt und mittels der abbildenden Optik (9), welche beispielsweise als Zoom-Objektiv ausgebildet ist, in die Zwischenbildebene (10) abbildet. In der Zwischenbildebene (10) ist eine Maske (11) angeordnet, welche entweder das Bild der Vorderfläche (12) oder das Bild der Rückfläche (13) der Linse (1) wegblendet. Die Maske (11) ist auf einem Drehteller im Gehäuse (14) angeordnet. Mittels eines Knopfes (15) kann die jeweils benötigte Maske (11) in den Strahlengang geschwenkt werden.

Das die Maske (11) passierende Licht wird mittels einer Relais-Linse (16) formatfüllend auf einen Detektor (17) abgebildet. Die von diesem erzeugten Bildsignale werden einer schematisch dargestellten Auswerteeinheit (18) zugeführt.

Bei bikonkaven, bikonvexen, plankonkaven und plankonvexen Linsen (1) besteht die Maske (11) nur aus einer geraden Schneide. Bei konkavenkonvexen Linsen werden zusätzlich zu einer Schneidenmaske noch gekrümmte Masken benötigt, um beide Linsenflächen sauber trennen zu können.

Bei entsprechender Ausbildung der Maske (11) ist es auch möglich, eine zwischen den Oberflächen (12) und (13) der Linse (1) gelegene Ebene zur Signalgewinnung auszuwählen. Diese Ebene läßt sich dann auf Einschlüsse untersuchen.

Der Detektor (17) kann auch als ortsauflösender Liniendetektor ausgebildet sein. In diesem Fall muß die Maske (11) verschiebbar angeordnet werden, um eine Trennung der Linsenflächen zur Auswertung über eine in der Auswerteeinheit (18) verwendete Soft-Ware machen zu können.

Anstelle der körperlichen Masken (11) ist es auch möglich, eine Maske zu verwenden, deren optische Transparenz steuerbar ist.

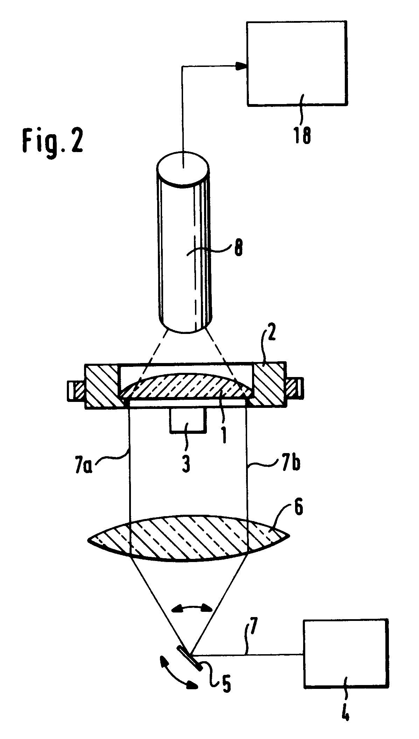

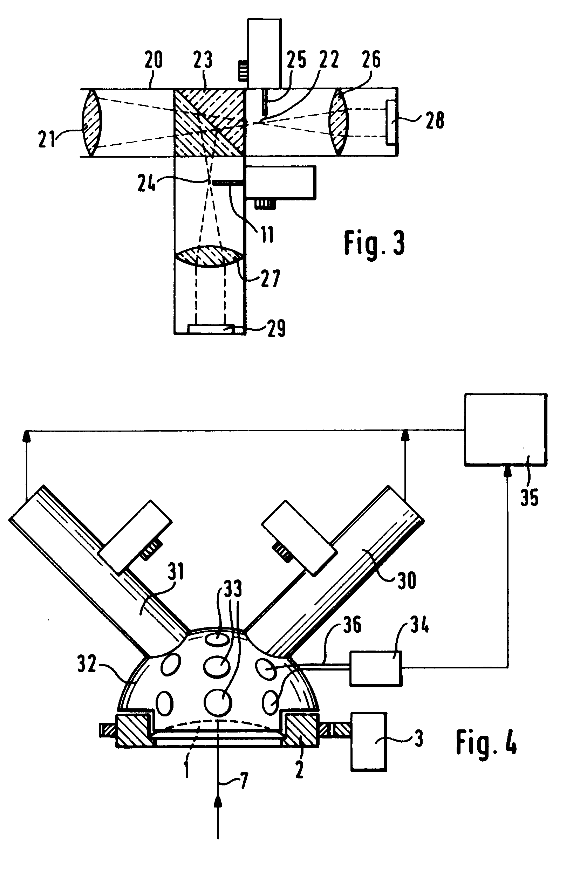

Anstelle der Einrichtung (8) zur Signalgewinnung, wie sie im Zusammenhang mit Fig. 1 und 2 dargestellt und beschrieben ist, läßt sich auch eine Einrichtung verwenden, wie sie beispielsweise in Fig. 3 dargestellt ist. Diese Einrichtung (20) besteht aus einem Objektiv (21), welches den Lichtschnitt durch die zu prüfende Linse (1) in die Zwischenbildebene (22) abbildet. Zwischen dem Objektiv (21) und der Zwischenbildebene (22) ist ein Teilerwürfel (23) angeordnet, welcher einen Teil des Lichtes um 90° umlenkt. Dieses umgelenkte Licht wird in die zweite Zwischenbildebene (24) abgebildet. In der Zwischenbildebene (22) ist eine auswechselbare Maske (25) angeordnet, welche beispielsweise das Bild der Vorderfläche (12) der Linse (1) ausblendet. Auch im seitlichen Ast der Einrichtung (20) ist in der Zwischenbildebene (24) eine Maske (26) angeordnet, welche beispielsweise das Bild der Rückfläche (13) der Linse (1) ausblendet. Das an den Masken (22) und (24) vorbeigehende Licht wird durch Relais-Linsen (26) und (27) auf schematisch dargestellte Detektoren (28) und (29) abgebildet.

Die Einrichtung (20) kann durch Vorsehen eines weiteren Teilerwürfels auch so ausgebildet werden, daß sie gleichzeitig den Empfang von drei Auswertesignalen aus drei unterschiedlichen Flächen bzw. Ebenen der Linse (1) ermöglicht.

Bei dem in Fig. 4 dargestellten Ausführungsbeispiel der neuen Vorrichtung sind zwei Einrichtungen (30) und (31) zur Signalgewinnung vorgesehen, welche symmetrisch zur Drehachse der Linse (1) angeordnet sind. Die beiden Einrichtungen (30) und (31) können beispielsweise gemäß Fig. 3 ausgebildet sein. Mittels dieser Einrichtungen gelingt es,Oberflächenfehler der Vorder- und der Rückseite der Linse (1) zu erfassen, welche relativ scharfkantig begrenzt sind und die das Licht isotrop streuen. Solche Fehler sind beispielsweise Kratzer und Haarrisse. Als Problemfälle haben sich Oberflächenfehler erwiesen, bei welchen die Oberfläche nur leicht eingedrückt ist. Solche Fehler sind als Wischer bekannt. Es hat sich herausgestellt, daß Wischer das Licht stark anisotrop streuen und zwar nur in einem eng begrenzten Raumwinkel, der große Werte annehmen kann. Um auch diese Oberflächenfehler erfassen zu können, ist eine sogenannte Integraloptik vorgesehen, welche aus einer Halbkugel (32) besteht. über diese Halbkugel sind mehrere Bohrungen (33) verteilt, in die jeweils eine kleine Abbildungslinse und ein nachgeordneter Detektor eingesetzt sind. Jedem Detektor ist ein einstellbarer Vorverstärker zugeordnet und die Signale aller Detektoren werden einer Anordnung (34) zugeleitet, welche daraus ein Signal bildet, das in seiner Stärke den Signalen vergleichbar ist welche die Einrichtungen (30) und (31) liefern. Alle Signale, d.h. die Signale der Einrichtungen (30) und (31) sowie Signale der Anordnung (34) werden gemeinsam einer Anordnung (35) zugeleitet, welche zur elektronischen Signalauswertung dient.

Es ist auch möglich, in den Bohrungen (33) der Halbschale (32) jeweils nur eine Abbildungslinse anzuordnen, welche das auftreffende Licht einem inkohärenten Lichtbündel (36) zuführt. Alle diese Lichtbündel führen gemeinsam zu einem Detektor, welcher anstelle der Anordnung (34) der Fig. 4 vorgesehen ist.

Die Einrichtungen (30) und (31) können zwischen den Signalen unterscheiden, welche der Vorder- oder der Rückseite der Linse (1) zugeordnet sind. Dies kann die Integraloptik der Halbkugel (32) nicht. Es ist deshalb notwendig, in der Auswerteanordnung (35) eine Signalverknüpfung aller zugeführten Signale vorzunehmen. Da zu jedem Zeitpunkt durch das punktweise Scannen die Ausgangssignale der Empfänger auf koinzidente Ereignisse abgefragt werden können, kann eine Zuordnung der im Integralempfänger aufgenommenen Information zu den einzelnen Linsenseiten erfolgen, solange mindestens einige Bildpunkte auch in den Einrichtungen (30) und (31) erkannt werden.

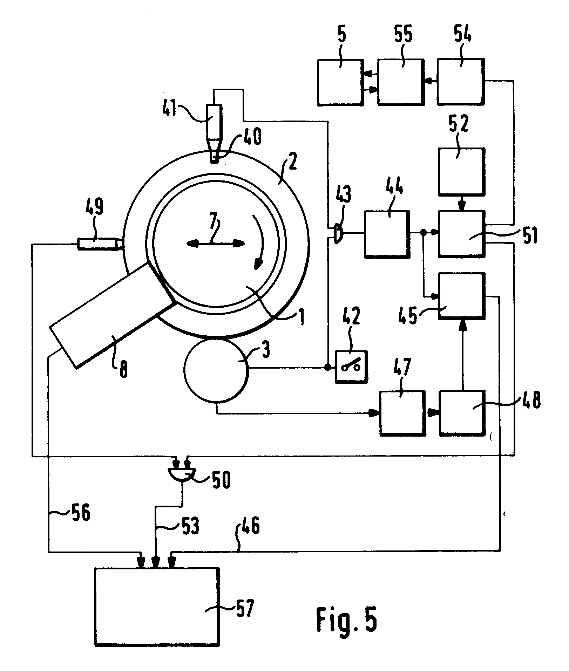

Im Ausführungsbeispiel der Fig. 5 ist eine Draufsicht auf die auszuwertende Linse (1) gezeigt, welche in Pfeilrichtung gedreht wird und deren Abtastung durch das Laser-Lichtbündel (7) in Richtung eines Durchmessers erfolgt. Der dadurch entstehende Lichtschnitt wird mittels einer Einrichtung (8) beobachtet, wie dies in Fig. 1 dargestellt ist. Aus Gründen der Übersichtlichkeit ist hier nur eine solche Einrichtung zur Signalgewinnung dargestellt.

Der Drehteller (2), in dem die Linse (1) zentriert ist, ist mit einer Marke (40) versehen, welche mittels eines Empfängers (41) detektiert wird. Das Signal vom Empfänger (41) markiert den Bildanfang und wird nach Betätigung des Schalters (42) zum Einschalten des Drehmotors (3) über ein Und-Gatter einer Anordnung (44) zugeführt, welche die Bildaufnahme startet. Von der Anordnung (44) gelangen die Signale zu einem Zeilenzähler (45), an dessen Ausgangsleitung (46) der Zeilentakt anliegt. Der Zeilenzähler (45) wird über einen Motor-Impulsgenerator (47)und einen Teiler (48) gesteuert.

Mit dem Drehteller (2) wirkt ein weiterer Empfänger (49) zusammen, der jeweils zu Beginn einer Zeile ein Signal erzeugt, das einem Und-Gatter (50) zugeführt wird. Diesem Und-Gatter wird über einen Bildpunkt-Zähler (51), welcher vom Bildpunkt-Taktgeber (52) gesteuert wird ein weiteres Signal zugeleitet. An der Ausgangsleitung (53) des Und-Gatters (50) liegt dann ein Bildpunkttakt-Signal an.

Der Bildpunkt-Zähler (51) steuert einen Generator (54) für die Scannerfunktion, d.h. für die Bewegung des Scannerspiegels (5). Über die Anordnung (54) wird die Scanner-Steuerung (55) betätigt, welche den Scanner (5) bewegt.

Am Ausgang (56) der Einrichtung (8) liegt das Videosignal an. Die Signale über die Leitungen (46, 53, 56) werden einem Empfänger (57) zugeführt, welcher ein Monitor-Bild der ausgewählten Fläche der Linse (1) zeigt. Auf diesem Monitor-Bild sind Oberflächenfehler der Linse (1) hell dargestellt, während die nicht fehlerhaften Bereiche dunkel bleiben.

Anstelle der bildhaften Auswertung über den Monitor (57) kann auch eine Anordnung zur elektronischen Bildauswertung vorgesehen sein, wie sie in der Patentanmeldung EP-A-0249798 mit dem Titel "Verfahren zum Prüfen von Bauteilen aus transparentem Material auf Oberflächenfehler und Einschlüsse", beschrieben und dargestellt ist, die denselben Anmeldetag wie die vorliegende Anmeldung hat.

**Patentansprüche**

1. Vorrichtung zum Prüfen von Bauteilen aus transparentem Material auf Oberflächenfehler und Einschlüsse, bei dem das Bauteil (1) mittels eines linear bewegten Lichtstrahles (7) punktförmig abgetastet ist und mindestens eine geneigt zur Auftreffrichtung des Beleuchtungsstrahls (7) angeordnete Einrichtung (8) vorgesehen ist, die aus einem abbildenden optischen System (9) besteht, in dessen Bildebene (10) eine Maske (11) zur Aussonderung des Bildes einer Ebene des Prüflings (1) angeordnet ist, und die einen von den die Maske (11) passierenden Lichtstrahlen beaufschlagten Empfänger (17) zur Detektion des von Fehlern des Bauteils beeinflußten Lichts enthält, der mit einer Anordnung (18) zur Auswertung der Empfangersignale zur Gewinnung von Signalen, die für die Bauteilfehler kennzeichnend sind, verbunden ist,
dadurch gekennzeichnet,
daß das zu prüfende Bauteil (1) um seine Achse rotierbar ist und um seine Achse rotierend vom linear in Durchmesser-richtung bewegten Lichtstrahl (7) abgetastet wird, daß die Einrichtung (8) unter einem vorwählbaren Win-kel zur Auftreffrichtung des Beleuchtungs-strahls neigbar ist und daß die Maske (11) zur Aussonderung des Bildes einer Ebene auswechselbar ist.

2. Vorrichtung nach Anspruch 1, dadurch gekennzeichnet, daß die Einrichtung (20) im Strahlengang des optischen Systems (21) einen Strahlenteiler (23) enthält, der einen Teil des Lichtes in eine zweite Einrichtung umlenkt, die ebenfalls eine auswechselbare Maske (26) und einen Empfänger (29) enthält.

3. Vorrichtung nach Anspruch 1 und 2, dadurch gekennzeichnet, daß das abbildende optische System (9, 21) als Zoom-Objektiv ausgebildet ist.

4. Vorrichtung nach Anspruch 1-3, dadurch gekennzeichnet, daß zwei Einrichtungen (30, 31) zur Signalerzeugung vorgesehen und symmetrisch zur Drehachse des zu prüfenden Bauteils (1) angeordnet sind.

5. Vorrichtung nach Anspruch 1-4, dadurch gekennzeichnet, daß zusätzliche Einrichtungen zur Signalerzeugung in einer Halbschale (32) angeordnet sind, die über ihre dem zu prüfenden Bauteil (1) zugeordnete Fläche verteilt mehrere Empfänger enthält.

6. Vorrichtung nach Anspruch 5, dadurch gekennzeichnet daß mehrere separate Empfänger vorgesehen sind, deren Signale elektrisch verknüpft werden.

7. Vorrichtung nach Anspruch 5, dadurch gekennzeichnet, daß die Halbschale (32) mehrere Linsen enthält, die jeweils das auftreffende Licht in eine flexible Lichtleitfasern (36) zu einem gemeinsamen Empfänger (34) führen.

**Claims**

1. Method of examining structural components made of transparent material for surface defects and inclusions, a moved light beam (4) being used for spot-type scanning of the component (1) and the light affected by defects of the structural component being detected and used for generating signals, the moved light beam (4) making a light section through the structural component (1), said light section being moved throughout said component, signals being generated during this movement which are assigned to the front and rear faces of the structural component (1), and these signals assigned to the faces being digitized, comprising: feeding the signals assigned to the faces in parallel both to a matrix memory (24, 30) and, via a preselectable number (x) of thresholds (20, 31), to a number (y) of sector counters (21, 32); evaluating the sector counters (21, 32) on-line according to a preselectable criterion with respect to number, position and grey-level distribution of the defect signals; if this criterion is not sufficiently satisfied, subsequently evaluating the signals of the matrix memory (24, 30) automatically via a computer (22); in addition, providing receivers (36 to 38) to detect anisotropically scattering defects of the structural component (1); feeding the signals generated by said receivers (36 to 38), via separate preamplifiers (39 to 41), to one common main amplifier (47), and deriving one trigger signal from the signal of each of the preamplifiers (39 to 41) as soon as the preamplifier signal exceeds a predetermined threshold value; adding all the trigger signals (46) and using the aggregate signal to control the gain factor of the main amplifier (47), and digitizing and evaluating the signal generated by said main amplifier.

2. Method as claimed in Claim 1, wherein the sector counters (21, 32) generate address signals for assigned areas of the matrix memory (24, 30).

3. Method as claimed in Claim 1, wherein the evaluation criterion evaluates the signals assigned to the front and rear faces of the structural component (1).

4. Method as claimed in Claim 1, wherein the signals emitted by area elements of the structural component (1), which are scanned repeatedly during the movement of the light section, are subjected to averaging (18, 29) prior to their digitization.

5. Method as claimed in any of Claims 1 to 4, wherein the digitized signals are used in addition to generate an image (12) of the selected area of the structural component (1).

6. Method as claimed in any of Claims 1 to 5, wherein the signals evaluated according to the specified evaluation criterion are used to classify the evaluated structural component (1).

7. Method as claimed in Claim 6, wherein classification is effected by controlling a unit (65) for sorting the evaluated structural components (66) into different sort stores (67 to 70).

**Revendications**

1. Dispositif pour contrôler les défauts de surface et les inclusions de composants réalisés en un matériau transparent, dispositif dans lequel le composant (1) est détecté ponctuellement à l'aide d'un faisceau lumineux (7) déplacé de manière linéaire et comportant au moins une installation (8) inclinée par rapport à la direction d'incidence du faisceau lumineux (7), installation qui se compose d'un système optique (9) de reproduction dont le plan image (10) comporte un masque (11) pour séparer l'image d'un plan du composant contrôlé (1), et comprend un récepteur (17) recevant le faisceau lumineux traversant le masque (11) pour détecter la lumière influencée par les défauts du composant, et est reliée à un dispositif (18) pour exploiter les signaux reçus et donner des signaux caractéristiques des défauts du composant,
dispositif caractérisé en ce que le composant (1) à contrôler peut tourner autour de son axe et est détecté pendant sa rotation autour de son axe, par un faisceau lumineux (7) déplacé linéairement dans la direction du diamètre, et l'installation (8) peut être inclinée suivant un angle pré-sélectionné par rapport à la direction d'incidence du faisceau d'éclairage et en ce que le masque (11) peut être remplacé pour sélectionner l'image d'un plan.

2. Dispositif selon la revendication 1, caractérisé en ce que l'installation (20) comprend un diviseur de faisceau (21) placé dans le chemin du faisceau du système optique (23), diviseur qui dévie une partie de la lumière dans une seconde direction contenant également un masque interchangeable (26) et un récepteur (29).

3. Dispositif selon la revendication 1 et 2, caractérisé en ce que le système optique de reproduction (9, 21) est un système optique à focal variable.

4. Dispositif selon les revendications 1-3, caractérisé en ce qu'il comporte deux installations (30, 31) pour générer des signaux et celles-ci sont montées symétriquement par rapport à l'axe de rotation du composant (1) à contrôler.

5. Dispositif selon les revendications 1-4, caractérisé par des installations complémentaires de génération de signaux placées dans une demi coquille (32) qui comporte plusieurs récepteurs répartis sur la surface associée au composant (1) à contrôler.

6. Dispositif selon la revendication 5, caractérisé par plusieurs récepteurs distincts dont les signaux sont combinés électriquement.

7. Dispositif selon la revendication 5, caractérisé en ce que la demi coquille (32) comporte plusieurs lentilles qui transmettent la lumière incidente respective à une fibre optique souple (36) pour un récepteur commun (34).

# Fig.1

Fig. 2

Fig. 3

Fig. 4

Fig. 5